Europäisches Patentamt

European Patent Office

Office européen des brevets

(11) Publication number: **0 270 957**
**B1**

## (12) EUROPEAN PATENT SPECIFICATION

(45) Date of publication of patent specification: **09.01.91**

(21) Application number: **87117609.5**

(22) Date of filing: **27.11.87**

(51) Int. Cl.⁵: **B 29 C 67/18, B 29 C 33/12,
B 29 C 45/14 // B29L31:08**

(54) Process for the manufacture of a rotor for shafts of electric motors, and apparatus for the execution of the process.

(30) Priority: **11.12.86 IT 2263486**

(43) Date of publication of application:
**15.06.88 Bulletin 88/24**

(45) Publication of the grant of the patent:
**09.01.91 Bulletin 91/02**

(84) Designated Contracting States:
**DE FR GB**

(56) References cited:
**FR-A-2 462 596
FR-A-2 483 308
US-A-4 264 222
US-A-4 445 817**

(73) Proprietor: **GRUPPO INDUSTRIALE ERCOLE
MARELLI S.p.A.
Viale Edison, 130
I-20099 Sesto S. Giovanni (MI) (IT)**

(72) Inventor: **Vezzoli, Vittore
Via Trento 1
I-20064 Gorgonzola (MI) (IT)**

(74) Representative: **Forattini, Amelia et al
c/o Internazionale Brevetti Ingg. ZINI,
MARANESI & C. S.r.l. Piazza Castello 1
I-20121 Milano (IT)**

Courier Press, Leamington Spa, England.

**Description**

This invention relates to a process according to the preamble of claim 1 and to an apparatus according to the preamble of claim 2 for the manufacture of a rotor, and in particular of a cooling fan in plastic material, intended to be keyed to the steel shaft of an electric motor.

Various manners are known in the prior art to lock on a shaft a molded rotor, and in particular a fan, for example by means of knurlings provided respectively on the inner cylindrical surface of the hole of the fan and in the outer surface of the shaft, by forcing the fan on the shaft, by means of radial locking screws, by prismatic tab-and-recess coupling, and the like. French patent application N. 2483308, upon which the preambles of claims 1 and 2 are based, for example, discloses a fastening and adjusting device on plastic materials for electric actuators comprising an elastic retaining ring for fastening a plug within a tube. Such keying methods according to the prior art are not fully satisfactory due to several disadvantages, among which the cost of machining, the cost of the assembly work, the uncertainty of the locking or the introduction of undesired strains and stress concentrations in the fan.

Therefore, the object of the present invention is to provide a process and an apparatus for the manufacture of a molded rotor intended to be keyed on a shaft, which is simple and reliable, which has modest machining and assembly costs, and which introduces no undue concentrations of stresses in the rotor.

More in particular, an object of the present invention is to provide a process and apparatus for the manufacture of a fan in plastic material, to be keyed to the shaft of an electric motor, having the above described advantages.

The above and other objects are achieved, according to the present invention, by a process characterized in that the rotor is manufactured in a mold comprising at least one first part and at least one second part, wherein an axial insertion elastic retaining ring is located at the center of the inner face of the first part of the mold, said ring being kept in an elastically divaricated state so that its inner diameter assumes the value of the nominal diameter of the driving shaft on which the rotor is to be locked, and so that it is coaxial thereto, characterized by the following steps:

the ends of said ring are inserted on a first axially offset pin which extends protrudingly parallel to the axis of the mold, to keep the elastic ring locked in said elastically divaricated state;

the mold is closed by placing the second part of the mold in contact with the first, the second part being provided with a second centered axial pin, having a diameter equal to the normal diameter of the rotor shaft, said second pin being protrudingly raised towards the inside of the mold and having such an axial length as to pass, upon the closure of the mold, through the elastic retaining ring locked on the first pin rigidly associated with the first part of said mold;

a fluid plastic material is injected into the mould;

when the molding is complete, the mold is opened, this simultaneously causing the extraction of the molded rotor from the mold and the removal from the pins of the elastic ring, which remains trapped and torsionally associated with the hub of the molded rotor and assumes a radially narrower rest position, such as to cause it to protrude radially from the inner surface of the hole of the rotor hub produced by the second pin.

The apparatus for the embodiment of the process according to the present invention comprises a mold for the manufacture of a rotor by means of a per se known molding process, the mold being constituted by a first part and by a second part, composable with one another in the position of closure of the mold by axial translatory motion, characterized in that the first part of the mold is provided with a first axially offset pin, protrudingly extending parallel to the axis of the mold from the inner surface thereof, and having such dimensions and location as to keep the elastic ring locked in an elastically spread state, so that its inner diameter assumes the value of the nominal diameter of the driving shaft on which the rotor is to be locked, and is coaxial thereto, the second part of the mold being provided with a second centered axial pin, protrudingly raised from said second part in such a position as to occupy, with the mold closed by placing the first and the second part in contact, the hole for the shaft in the rotor hub, the diameter of the second pin being nominally equal to that of the driving shaft on which the rotor is to be mounted.

The present invention and its pecularities and advantages will become apparent from the following description of a preferred, but non-limitative, embodiment thereof, illustrated in the accompanying drawings, wherein:

figure 1 is a front view of a fan manufactured by means of the process and the apparatus according to the present invention;

figure 2 is an axial sectional detail view thereof;

figure 3 is a schematic front view of the inner side of the first part of a mold for the manufacture of the fan shown in figures 1 and 2;

figure 4 is a schematic lateral view thereof in axial cross section;

figure 5 is a schematic front view of the inner side of the second part of the mold;

figure 6 is a schematic lateral view thereof in axial cross section;

figure 7 is a schematic lateral view, in partial axial cross section, of the closed mold, and

figure 8 is a view of an enlarged detail of figure 3.

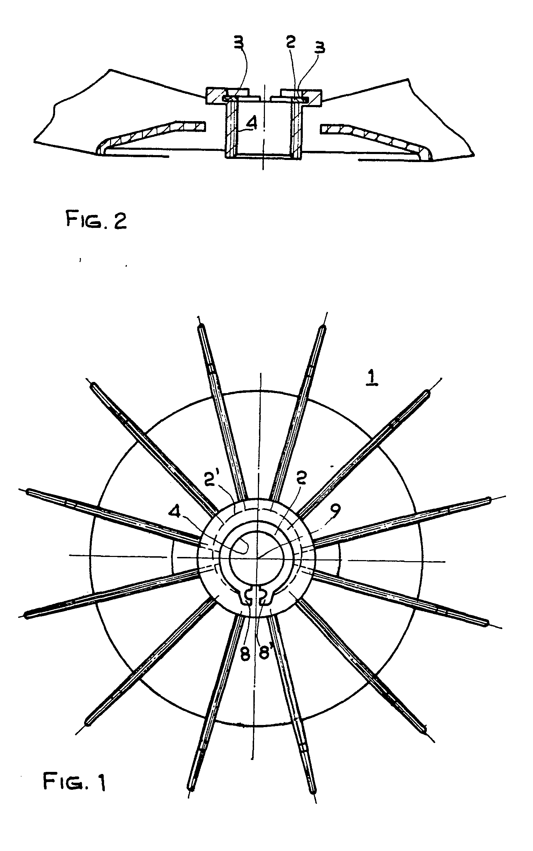

Figures 1 and 2 show, respectively in front view and in axially sectional detail view, an injection-molded plastic fan 1 according to the invention, the driving shaft whereof is the shaft of an electric motor, not shown.

In figures 1 and 2 an axial insertion elastic retaining ring 2 (also called Seeger ring) is partially visible, and constitutes the element for locking by friction the fan to its driving shaft. In figure 1 only a radially inner perimetral part of the elastic ring 2 can be seen, the outer perimeter of the latter, eccentric with respect to the inner one and represented by a broken line 2', being accommodated in an annular recess 3 of the hub of the fan, which can be seen in cross section in figure 2. The elastic ring is illustrated in the condition of radial expansion which it assumes when it is keyed, together with the fan which includes it, on the driving shaft, not shown, which passes through the hole 4 of the hub of the fan.

The state of elastic expansion of the ring 2 is due to the interference between its inner diameter and the diameter of the shaft. In this state the ring 2, which is free in a radial direction in the annular recess 3 of the fan but is rigidly torsionally associated therewith, locks by friction the fan on the shaft.

According to the present invention, the elastic ring 2, generally of hardened steel, is included in the annular recess 3 of the hub of the fan during the molding, preferably by injection, of said fan.

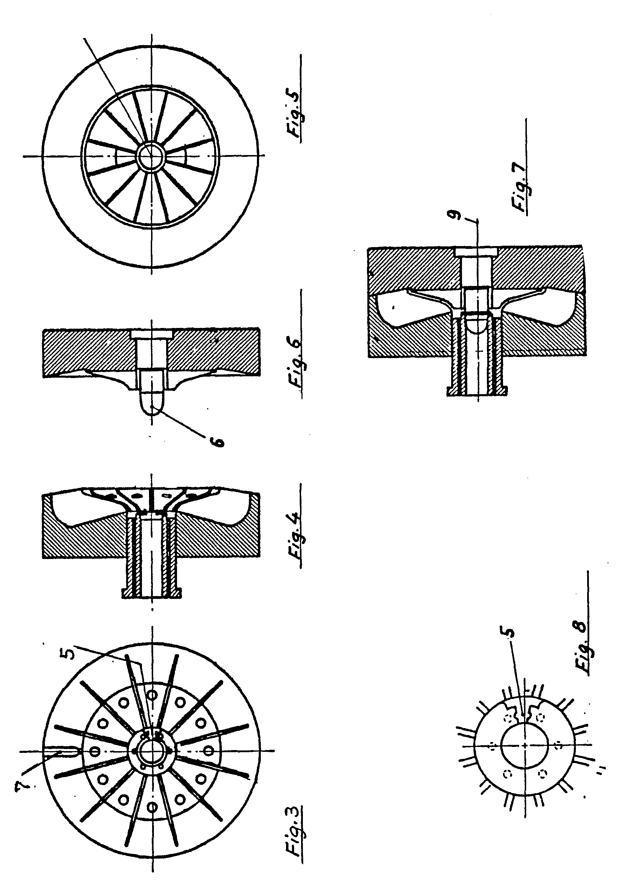

In figures 3 to 7, the mold for the manufacture of the fan is illustrated, comprising a first part respectively shown in front view from inside (figure 3) and in axial cross section (figure 4), and a second part also shown in front view from the interior of the mold (figure 5) and in axial cross section (figure 6). Figure 7 is an axial cross section view of the closed mold. Figure 8 is an enlarged detail of figure 3.

The process for the manufacture of the fan, which allows its locking to the driving shaft as described above, is as follows:

the elastic retaining ring 2 is located on a conveniently shaped pin 5 (figures 3 and 8) located in the first part of the open mold,

the position assumed by the retaining ring in this step is that which it would have if it operated on the driving shaft of the fan 1,

during the molding step the mold is closed and the ring 2 remains in the previous position, allowing the injection of the plastic around its outer circumference through the channel 7. The pin 6 of the second part of the mold, which has the same diameter as the driving shaft, assumes the position thereof in the hole of the hub,

upon the opening of the mold, simultaneously with the extraction of the plastic fan, the elastic retaining ring 2 is forced to exit from the pins 5 and 6, again assuming, by virtue of its elasticity, its normal rest position.

In this manner an empty chamber is formed around the elastic ring which allows the same to return to its working position when the fan is to be mounted on its shaft.

The material preferably used for the fan is polypropylene or a polyamide resin loaded with glass. It has been observed that after its extraction from the mold the elastic ring maintains, in the annular recess 3, the freedom of radial contraction required to exert the locking pressure on the shaft, without requiring the application of a mold lubricating agent. The latter is however naturally applicable if the adopted types of material and molding process require it.

The pin 5, besides having the function of positioning the elastic retaining ring 2, also has the function of keeping free from molding material the space between the two ends of said ring to allow its elastic return when it is extracted from the mold.

The fan thus manufactured is mounted by forcing on the shaft on which is it to be keyed, and is locked thereon by interference friction against the elastic ring, the shaft being beveled at one end so as to allow the elastic ring to be introduced by virtue of the elastic expansion thereof caused by the forcing.

Naturally, the locking process and the apparatus for its embodiment according to the present invention are susceptible to numerous modifications without thereby leaving the scope of the invention as defined in the appended claims. Thus, for example, they are applicable with obvious modifications to rotors having any shape and of any appropriate plastic or metallic material, and to any appropriate molding or sintering of die-casting process and the like.

## Claims

1. Process for the manufacture of a rotor for shafts of electric motors by plastic transformation in a mold constituted by at least one first part and one second part, wherein an axial insertion elastic retaining ring (2) is located at the center of the inner face of the first part of the mold, said ring (2) being kept in an elastically divaricated state so that its inner diameter assumes the value of the nominal diameter of the driving shaft on which the rotor (1) is to be locked, and so that it is coaxial thereto, characterized by the following steps:

the ends (8, 8') of said ring (2) are inserted on a first axially offset pin (5) which extends protrudingly, parallel to the axis of the mold (9), to keep the elastic ring (2) locked in said elastically divaricated state;

the mold is closed by placing the second part of the mold in contact with the first, the second part being provided with a second centered axial pin (6), having a diameter equal to the nominal diameter of the rotor shaft, said second pin being protrudingly raised towards the inside of the mold and having such an axial length as to pass, upon the closure of the mold, through the elastic retaining ring (2) locked on the first pin (5) rigidly associated with the first part of said mold;

a fluid plastic material is injected into the mould;

when the moulding is complete, the mold is opened, this simultaneously causing the extraction of the molded rotor (1) from the mold and the removal from the pins (5, 6) of the ring (2), which remains trapped and torsionally associated with the hub of the molded rotor and assumes a radially narrower rest position, such as to cause it to protrude radially from the inner surface (4) of the hole of the rotor hub produced by the second pin (6).

2. Apparatus for the execution of the process according to claim 1, comprising a mold for the manufacture of a rotor by plastic deformation, said mold being constituted by a first part and by a second part, composable with one another in the position of closure of the mold by axial translatory motion, said first part of the mold comprising an elastic retaining ring (2) locked in an elastically spread state so that its inner diameter assumes the value of the nominal diameter of the driving shaft on which the rotor (1) is to be locked, and so that it is coaxial thereto, characterized in that said first part of the mold is provided with a first axially offset pin (5) which extends protrudingly, parallel to the axis of the mold (9), from the inner surface thereof and has such dimensions and location to keep the elastic retaining ring (2) locked in said elastically spread state, the second part of the mold is provided with a second centered axial pin (6), protrudingly raised from said second part in such a position as to occupy, with the mold closed by contact between the first part and the second part, the hole (4) for the shaft in the rotor hub, the diameter of the second pin (6) being nominally equal to that of the driving shaft on which the rotor (1) is to be mounted, the shaft being bevelled at one end.

3. Process according to claim 1, characterized in that the rotor is a fan for an electric motor.

4. Process according to claim 1, characterized in that the 2 molding material is polypropylene with glass fiber load.

5. Process according to claim 1, characterized in that the molding material is a polyamide resin with glass fiber load.

## Patentansprüche

1. Verfahren zur Herstellung eines Rotor für die Wellen von Elektromotoren durch Kunststoff-Umformung in einer aus wenigstens einem ersten und einem zweiten Teil bestehenden Form, wobei ein elastischer, axial eingesetzter Sprengring (2) im Zentrum der Innenseite des ersten Teils der Form angeordnet und in einem elastisch gespreizten Zustand derart gehalten wird, daß sein Innendurchmesser den Werts des Solldurchmessers der Antriebswelle annimmt, auf der Rotor (1) verriegelt werden soll, gekennzeichnet durch die folgenden Schritte:

Auflegen der Enden, (8, 8') des Rings (2) auf einen ersten, axial versetzten Stift (5), der sich hervorspringend parallel zur Achse der Form (9) erstreckt, um den elastischen Ring (2) in dem elastisch gespreizten Zustand zu halten;

Schließen der Form durch Inberührungbringen des zweiten Teils der Form mit dem ersten Teil, wobei das zweite Teil mit einem zweiten, axial zentrierten Stift (6) versehen ist, dessen Durchmesser gleich dem Solldurchmesser der Rotorwelle ist und der in Richtung des Innenraums der Form vorsteht und eine solche axiale Länge besitzt, daß er nach dem Schließen der Form den elastischen Sprengring (2) durchragt, der auf dem ersten, dem ersten Teil der Form starr zugeordneten Stift festgelegt ist;

Einspritzen eines fluiden Kunststoffmaterials in die Form;

und Öffnen der Form nach Vollendung des Gußvorgangs, wodurch gleichzeitig ein Herausziehen des geformten Rotors (1) aus der Form und eine Entfernung des Rings (2) von den Stiften (5, 6) verursacht wird, so daß der Ring (2) in der Nabe der Rotors eingefangen und ihr drehmäßig zugeordnet bleibt und eine radial engere Ruhestellung annimmt, in der er radial vom Innenmantel (4) des vom zweiten Stift (6) gebildeten Durchgangs der Rotornabe vorsteht.

2. Vorrichtung zum Ausführen des Verfahrens nach Anspruch 1, enthaltend eine Form zur Herstellung eines Rotors durch plastische Verformung, wobei die Form aus einem ersten und einem zweiten Teil besteht, die zur Schließung der Form durch eine axiale, translatorische Bewegung zusammenfügbar sind, wobei das erste Teil der Form einen elastischen Sprengring (2) aufweist, der in einem elastisch gespreizten Zustand so festgelegt ist, daß sein Innendurchmesser den Wert des Solldurchmessers der Antriebswelle annimmt, auf der der Rotor (1) versiegelt werden soll und er koaxial dazu angeordnet ist, dadurch gekennzeichnet, daß das erste Teil der Form mit einem ersten axial versetzten Stift (5) versehen ist, der paralle zur Achse der Form (9) von deren Innenfläche vorsteht und so dimensioniert und angeordnet ist, daß der elastische Sprengring (2) in dem elastisch gespreizten Zustand gehalten wird, während der zweite Teil der Form mit einem zweiten, axial zentrierten Stift (6) versehen ist, der von dem zweiten Teil in einer solchen Position vorsteht, daß er in dem durch Inberührungsbringen des ersten und zweiten Teils hergestellten, geschlossenen Zustand der Form den Durchgangs (4) für die Welle in der Rotornabe besetzt, wobei der Solldurchmesser des zweiten Stift (6) gleich dem Durchmesser der Antriebswelle ist, auf dem der Rotor (1) montiert werden soll und die an einem Ende abgeschrägt ist.

3. Verfahren nach Anspruch 1, dadurch gekennzeichnet, daß der Rotor ein Lüfter für einen Elektrmotor ist.

4. Verfahren nach Anspruch 1, dadurch gekennzeichnet, daß der Kunstharzpressstoff auf glasfaserverstärktem Polypropylen besteht.

5. Verfahren nach Anspruch 1, dadurch gekennzeichnet, daß der Kunstharzpressstoff ein glasfaserverstärktes Polyamidharz ist.

## Revendications

1. Procédé pour la fabrication d'un rotor pour l'arbre d'un moteur électrique par moulage d'une matière plastique dans un moule comprenant au moins une première partie et une seconde partie et dans lequel une bague de retenue (2) élastique insérée axialement est logée au centre de la face interne de la première partie du moule, ladite bague (2) étant maintenue à l'état élastiquement ouvert de sorte que son diamètre intérieur correspond à la valeur nominale du diamètre de l'arbre d'entraînement sur lequel le rotor (1) doit être assujetti de telle sorte qu'elle se trouve coaxiale par rapport à cet arbre, caractérisé en ce qu'il consiste:

à placer les extrémités (8, 8') de la bague (2) sur une première goupille (5) axialement décalée et que s'étend parallèlement à l'axe géométrique du moule (9) en vue de conserver la bague élastique (2) verrouillée dans ledit état élastiquement ouvert;

à fermer le moule en plaçant sa seconde partie en contact avec la première, ladite seconde partie étant pourvue d'une seconde goupille (6) centrée axialement et dont le diamètre est égal à celui normal de l'arbre du rotor, ladite seconde goupille qui fait saillie en direction de l'intérieur du moule étant pourvue d'une longueur axiale telle que lors de la fermeture du moule elle traverse la bague (2) de retenue élastique verrouillée sur la première goupille (5) fixée rigidement sur la première partie du moule;

à injecter une matière plastique fluide dans le moule;

à ouvrir le moule lorsque le moulage est achevé de manière à provoquer simultanément l'éjection du rotor moulé hors du moule, l'extraction des goupilles (5, 6) par rapport à la bague (2) qui reste prisonnière du moyeu du rotor moulé et associée angulairement avec lui pour occuper une position de repos radialement plus reserrée, de manière qu'elle s'étende radialement à partir de la face interne (4) du trou du moyeu du rotor réalisé par la seconde goupille (6).

2. Appareil pour la mise en oeuvre du procédé suivant la revendication 1, comprenant un moule pour la fabrication d'un rotor par moulage d'une matière plastique, lequel moule est constitué par une première et une seconde partie coopérant entre elles dans la position fermée du moule par mouvement axial de translation, ladite première partie retenant une bague (2) verrouillée à l'état élastiquement ouvert si bien que son diamètre intérieur correspond à la valeur nominale du diamètre de l'arbre de commande sur lequel le rotor (1) doit être assujetti, de telle sorte qu'elle se trouve co-axiale par rapport à cet arbre, caractérisé en ce que la première partie du moule est pourvue d'une première goupille (5) axialement décalée et s'étendant parallèlement à l'axe géométrique du moule (9) à partir de sa face interne, l'emplacement et les dimensions de cette goupille étant tels que la bague élastique (2) de retenue est verrouillée dans son état élastique étendu, la seconde partie du moule étant pourvue d'une seconde goupille (6) centrée axialement et faisant saillie à partir de ladite seconde partie dans une position telle que lorsque le moule est fermé ses première et second parties étant en contact, elle occupe le trou (4) du moyeu du rotor recevant son arbre, le diamètre de la seconde goupille (6) étant nominalement égal à celui de l'arbre d'entraînement sur lequel le rotor (1) doit être monté, l'une des extrémités de l'arbre étant chanfreinée.

3. Procédé suivant la revendication 1, caractérisé en ce que le rotor est le ventilateur d'un moteur électrique.

4. Procédé suivant la revendication 1, caractérisé en ce que la matière platique de moulage est du polypropylène chargé de fibres de verre.

5. Procédé suivant la revendication 1, caractérisé en ce que la matière plastique de moulage est une résine polyamide chargée de fibres de verre.

FIG. 2

FIG. 1

Fig. 5

Fig. 6

Fig. 4

Fig. 3

Fig. 7

Fig. 8